(19) Europäisches Patentamt European Patent Office Office européen des brevets

(11) **EP 4 299 822 B1**

(12) **EUROPEAN PATENT SPECIFICATION**

(45) Date of publication and mention of the grant of the patent:
**29.04.2026 Bulletin 2026/18**

(21) Application number: **21927388.5**

(22) Date of filing: **02.04.2021**

(51) International Patent Classification (IPC):
*D06F 58/32* (2020.01)    *D06F 58/46* (2020.01)
*D06F 58/26* (2006.01)    *D06F 105/56* (2020.01)
*D06F 103/38* (2020.01)

(52) Cooperative Patent Classification (CPC):
**D06F 58/38; D06F 58/46;** D06F 58/02; D06F 58/26;
D06F 2103/08; D06F 2103/32; D06F 2103/38;
D06F 2105/12; D06F 2105/28; D06F 2105/52;
D06F 2105/56; Y02B 40/00

(86) International application number:
**PCT/CN2021/085303**

(87) International publication number:
**WO 2022/178954 (01.09.2022 Gazette 2022/35)**

(54) **DRYING CONTROL METHOD AND APPARATUS, AND CLOTHES PROCESSING DEVICE AND STORAGE MEDIUM**

TROCKNUNGSSTEUERUNGSVERFAHREN UND -VORRICHTUNG SOWIE WÄSCHEVERARBEITUNGSVORRICHTUNG UND SPEICHERMEDIUM

PROCÉDÉ ET APPAREIL DE COMMANDE DE SÉCHAGE, ET DISPOSITIF DE TRAITEMENT DE VÊTEMENTS ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2021 CN 202110217165**

(43) Date of publication of application:
**03.01.2024 Bulletin 2024/01**

(73) Proprietor: **Wuxi Little Swan Electric Co., Ltd.**
**Wuxi, Jiangsu 214028 (CN)**

(72) Inventors:
• **PADERNO, Jurij**
  **Wuxi, Jiangsu 214028 (CN)**
• **SAUPE, Rene Thomas**
  **Wuxi, Jiangsu 214028 (CN)**

(74) Representative: **Ran, Handong**
  **Maucher Jenkins**
  **Seventh Floor Offices**
  **Artillery House**
  **11-19 Artillery Row**
  **London SW1P 1RT (GB)**

(56) References cited:
CN-A- 103 958 765    CN-A- 111 534 996
JP-A- H01 135 396    JP-A- H01 135 396
JP-A- H11 319 396    US-A- 5 782 012
US-A1- 2007 220 683    US-A1- 2011 023 321
US-A1- 2012 084 997

## Description

### FIELD

The present invention belongs to the technical field of electrical equipment, and more particularly, to a drying control method and apparatus, a laundry treatment device, and a storage medium.

### BACKGROUND

Currently, people often use a clothes dryer to dry clothes, but the clothes dryer may not obtain an amount of a load placed in a tub body by a user and a water content in the load, which causes the clothes dryer not to automatically determine a drying duration required for drying the load.

In order to enable the clothes dryer to determine the drying duration, multiple detection devices, such as a temperature sensor or a humidity sensor, is usually provided in the clothes dryer in the related art. The detection devices are used to detect a temperature or humidity in the tub body during drying, and infer a remaining water content in the load based on the detected temperature or humidity, to determine the drying duration.

However, in the related art, the multiple detection devices are needed, which cost a lot. Reference may be made to any of:

US 2012/084997 A1, which relates to a method to detect an end of cycle in a clothes dryer;

US 2007/220683 A1, which relates to a drum type washing machine and drying method thereof;

US 2011/023321 A1, which relates to a dryer control method including a hot wind supply step, an intermediate dry step, and a cooling step;

JP H01 135396 A, which relates to a dryer, wherein a drying operation is ended when operation time signals of shorter than about one minute are outputted during an intermittent operation period by a timing means for outputting the time signals of the operation of the heater and the stoppage; and

US 5 782 012 A, which relates to a wrinkle out cycle for a dryer wherein a control circuit substantially alternately energizes the heater and the timer in response to the temperature sensor.

### SUMMARY

The present invention is defined by the independent claims, to which reference should now be made. Specific embodiments are defined in the dependent claims. This present disclosure proposes a drying control method and apparatus, a laundry treatment device, and a storage medium. According to the present disclosure, by alternately turning on or off the heating device, the load is alternately heated and cooled, enabling a temperature detected by a temperature sensor to be closer to an actual temperature of a load. Accuracy of estimating a drying duration according to the detected temperature is very high. By alternately turning on or off the heating device, it may be realized that only one temperature sensor is used to accurately estimate the drying duration. Therefore, a product cost is reduced, and a drying effect is enhanced.

According to embodiments of a first aspect of the present invention, provided is a drying control method, including: controlling a heating device to be alternately turned on or off based on a predetermined drying rule; obtaining a drying temperature detected by a temperature sensor, and determining a drying duration required for drying a load; and controlling a current drying procedure to end based on the drying duration.

The predetermined drying rule includes a predetermined duration corresponding to each control stage of the heating device; and said controlling the heating device to be alternately turned on or off based on the predetermined drying rule includes: determining that the drying procedure is started, controlling a motor to drive a tub body to rotate, and in response to determining that a first predetermined cooling duration is reached, controlling the heating device to start for a first predetermined heating duration; in response to determining that the first predetermined heating duration is reached, controlling the heating device to be turned off for a second predetermined cooling duration; in response to determining that the second predetermined cooling duration is reached, controlling the heating device to start for a second predetermined heating duration; and in response to determining that the second predetermined heating duration is reached, controlling the heating device to be turned off for a third predetermined cooling duration.

In some embodiments of the present invention, said obtaining the drying temperature detected by the temperature sensor, and determining the drying duration required for drying the load includes: obtaining two drying temperatures detected by the temperature sensor in each control stage of the heating device; and calculating the drying duration required for drying the load by a predetermined second time-temperature function based on the two drying temperatures corresponding to each control stage.

Said controlling the current drying procedure to end based on the drying duration includes: determining a remaining drying duration based on the drying duration and a predetermined duration of each control stage in which the heating device is started and which has been executed; in response to determining that the third predetermined cooling duration is reached, controlling the heating device to start for the remaining drying duration; in response to determining that the remaining drying duration is reached, controlling the heating device to be turned off for a predetermined final cooling duration included in the predetermined drying rule; and in response to determining that the predetermined final cooling duration is reached, controlling the motor to be turned off.

According to embodiments of a second aspect of the present invention, a drying control apparatus is provided. The drying control apparatus includes a heating device control module, a drying duration determination module, and a drying end control module. The heating device control module is configured to control a heating device to be alternately turned on or off based on a predetermined drying rule. The drying duration determination module is configured to obtain a drying temperature detected by a temperature sensor, and determine a drying duration required for drying a load. The drying end control module is configured to control a current drying procedure to end based on the drying duration.

According to embodiments of a third aspect of the present invention, a laundry treatment device is provided. The laundry treatment device includes a memory, a processor, and a computer program stored on the memory and executable on the processor, and further includes a temperature sensor disposed at any one of an air duct, a tub body, a heating pipeline, a heating device, and a condensing device of the laundry treatment device. The processor is configured to execute the computer program to implement the method as described in the first aspect.

According to embodiments of a fourth aspect of the present invention, a computer-readable storage medium is provided. The computer-readable storage medium has a computer program stored thereon. The program, when executed by a processor, implements the method as described in the first aspect.

The technical solutions according to the embodiments of the present invention have at least the following technical effects or advantages.

In the embodiments of the present invention, by controlling the heating device to be alternately turned on or off, the load is alternately heated and cooled. Moreover, in a cooling stage, a temperature of the load is closer to an ambient temperature in the tub body. The drying temperature detected by the temperature sensor is equal to the ambient temperature in the tub body. In this situation, in a way of alternating heating and cooling enables the drying temperature detected by the temperature sensor to be closer to the actual temperature of the load through. Therefore, the drying duration for drying the load is estimated according to the drying temperature detected by the temperature sensor, and the accuracy of estimating the drying duration is very high. Further, the drying duration may be estimated by estimating the initial water content of the load, to solve a problem of low accuracy of determining the drying duration due to unknown initial water content. By properly controlling the heating device to be alternately turned on or off, it is achieved that only one temperature sensor is used to precisely estimate the drying duration. Moreover, in this solution, timing for controlling an end to the drying procedure is very reasonable. Therefore, not only is the product cost reduced, but also the drying effect is improved.

Additional aspects and advantages of the present invention will be provided in part in the following description, or will become apparent in part from the following description, or can be learned from practicing of the present invention.

BRIEF DESCRIPTION OF THE DRAWINGS

Various other advantages and benefits will become apparent to those skilled in the art after reading the detailed description of preferred embodiments given below. The accompanying drawings are used for a purpose of illustrating the preferred embodiments only, rather than limiting the present disclosure. Moreover, throughout the accompanying drawings, same elements are denoted by same reference numerals. In the accompanying drawings:

FIG. 1 illustrates a schematic structural diagram of a vented dryer according to an embodiment of the present disclosure.

FIG. 2 illustrates a schematic structural diagram of a condenser dryer according to an embodiment of the present disclosure.

FIG. 3 illustrates a schematic flow chart of a drying control method according to an embodiment of the present disclosure.

FIG. 4 illustrates a schematic flow chart of controlling a heating device to be alternately turned on or off according to an embodiment of the present disclosure.

FIG. 5 illustrates a schematic diagram of control of a motor and a heating device and a change curve of a temperature detected by a temperature sensor over time during control illustrated in FIG. 4;

FIG. 6 illustrates a schematic flow chart of determining, in a heating stage, whether a drying procedure needs to be ended according to an embodiment of the present disclosure.

FIG. 7 illustrates a schematic flow chart of drying control under different water content conditions according to an embodiment of the present disclosure.

FIG. 8 illustrates a schematic structural diagram of a drying control apparatus according to an embodiment of the present disclosure.

FIG. 9 illustrates a schematic structural diagram of a laundry treatment device according to an embodiment of the present disclosure.

FIG 10 illustrates a schematic diagram of a storage medium according to an embodiment of the present disclosure.

**DETAILED** DESCRIPTION

Exemplary embodiments of the present invention will be described in more detail below with reference to the accompanying drawings. Although exemplary embodiments are illustrated in the accompanying drawings, it should be understood that the present invention may be embodied in various forms and should not be limited to the embodiments set forth herein. Rather, these embodiments are provided for thorough understanding of the present invention and full conveying of the scope of the present invention to those skilled in the art.

It should be noted that, unless otherwise specified, technical terms or scientific terms used herein shall have general meanings understood by those skilled in the art.

A drying control method and apparatus, a laundry treatment device, and a storage medium according to embodiments of the present invention will be described below with reference to the accompanying drawings.

Provided are a number of factors affecting accuracy of a clothes dryer determining when a drying procedure ends. The most significant influence factor is a weight and an initial water content of a load placed in a tub body. In addition, factors affecting the determination accuracy further include differences between different machines of the same model (e.g., differences caused by different manufacturing processes or different components), ambient temperature and humidity, a supply voltage, and a mechanical interaction between the load and an inner wall of the tub body (e.g., winding or friction generated by the load at the inner wall of the tub body, etc.). The embodiments of the present disclosure provide a drying control method, which can estimate the initial water content of the load and further estimate a drying duration required for drying the load. By appropriately controlling the heating device to be alternately turned on or off, an influence of the main influence factors on estimation precision of the drying duration is reduced, and an influence of other influence factors on the estimation precision may be decreased to some extent. Moreover, prediction of the drying duration may be realized only by one temperature sensor, which lowers a product cost.

An execution body of the embodiments of the present disclosure is a laundry treatment apparatus such as a clothes dryer or a washing and drying integrated machine. The laundry treatment apparatus may only be provided with one temperature sensor. When the drying procedure is executed, the method controls the heating device to be alternately turned on or off, to alternately heat and cool a load needing to be dried. In this way, a temperature of the load is made closer to an ambient temperature in the tub body. A drying temperature detected by the temperature sensor is equal to the ambient temperature in the tub body, and is closer to an actual temperature of the load by alternating heating and cooling. Therefore, a drying duration for drying the load is estimated based on the drying temperature detected by the temperature sensor, and accuracy of estimating the drying duration is very high. By befittingly controlling the heating device to be alternately turned on or off, it is realized that only one temperature sensor is used to accurately estimate the drying duration. Moreover, in this way, timing for controlling an end to the drying procedure is very reasonable. Therefore, not only is a cost of the laundry treatment device reduced, but also a drying effect is improved.

In the embodiments of the present disclosure, the laundry treatment apparatus at least includes a tub body, a heating device, a motor, and a temperature sensor. The tub body is configured to accommodate the load needing to be dried. The heating device is configured to heat the load in the tub body. The heating device may include a gas burner, an electric heating device, a heat-pump heat exchanger, or the like. The motor is configured to drive the tub body to rotate. The temperature sensor is configured to detect a drying temperature in the tub body, and the drying temperature is equal to the ambient temperature in the tub body. In the embodiments of the present disclosure, by suitably controlling the heating device to be alternately turned on or off, the ambient temperature in the tub body can be close to a temperature of the load. Therefore, the drying temperature detected by the temperature sensor in the embodiments of the present disclosure may also be considered to be equal to the temperature of the load.

The laundry treatment apparatus may be any laundry treatment device having a motor, a heating device, and a temperature sensor for drying. For example, the laundry treatment apparatus may include a gas dryer, a vented dryer, a heat pump dryer, a condenser dryer, or the like. Each of a structure of the laundry treatment apparatus as the vented dryer and the condenser dryer is described below with reference to the accompanying drawings.

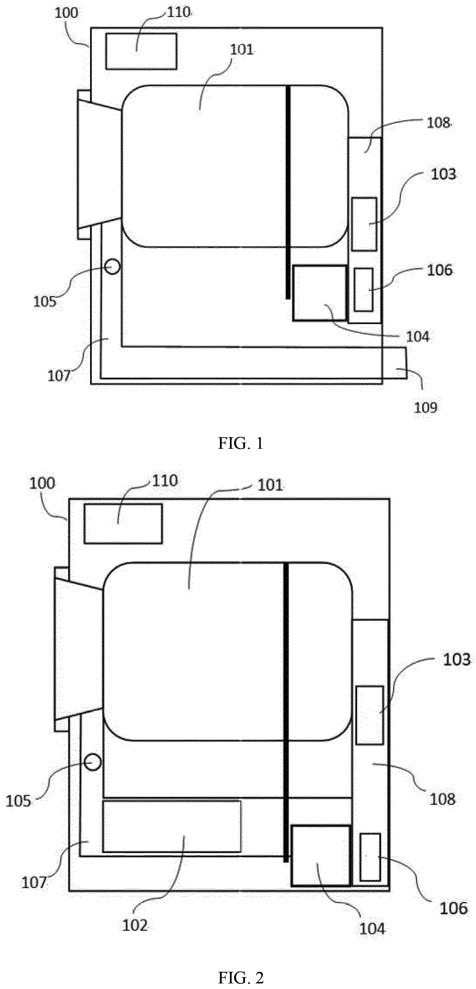

As illustrated in FIG. 1, the vented dryer includes a tub body 101, a heating device 103, a motor 104, a temperature sensor 105, a fan 106, an air duct 107, a heating pipeline 108, a ventilation opening 109, and a controller 110. The heating device 103 and the fan 106 are disposed inside the heating pipeline 108. The fan 106 is disposed below the heating device 103. The fan 106 blows air to move to be heated at the heating device 103, and blows the hot air into the tub body 101 through the heating pipeline 108. Moreover, the hot air enters the tub body 101 to increase a temperature of a load to be dried in the tub body 101, and moisture contained in the load is heated and evaporated into the air. The wet and hot air in the tub body 101 is transmitted to the ventilation opening 109 through the air duct 107 and is discharged from the ventilation opening 109. Therefore, the moisture in the load is separated from the load to achieve the drying effect. During the entire process, the temperature sensor 105 disposed in the air duct 107 may detect a temperature of the wet and hot air passing through the air duct 107. The controller 110 implements the drying process by controlling turning on or off of the motor 104 and turning on or off of the heating device 103, and performs drying determination control on the drying procedure on the basis of a temperature detected by the temperature sensor 105.

The condenser dryer is illustrated in FIG. 2 and has some same components as the vented dryer illustrated in FIG. 1, such as the tub body 101, the heating device 103, the motor 104, the temperature sensor 105, the fan 106, and the controller 110, which are not reiterated herein. A difference between the condenser dryer and the vented dryer lies in that no ventilation opening 109 is provided in the condenser dryer, and the air duct 107 is in communication with the heating pipeline 108 to form a closed air flow loop. Moreover, the condenser device 102 is provided in the air duct 107. During drying, the controller 110 controls the motor 104, the heating device 103, and the fan 106 to work. Moreover, the fan 106 blows air to move to be heated at the heating device 103, and transmits the hot air into the tub body 101 through the heating pipeline 108. Moreover, the hot air enters the tub body 101 to increase the temperature of the load to be dried in the tub body 101, and the moisture contained in the load is heated and evaporated into the air. The wet and hot air in the tub body 101 is transmitted to the condenser device 102 through the air duct 107. Moreover, water vapor in the wet and hot air at the condenser device 102 is condensed into liquid water. Therefore, the moisture in the load is separated from the load to achieve the drying effect. Similarly, the temperature sensor 105 disposed in the air duct 107 may detect the temperature of the wet and hot air passing through the air duct 107. The controller 110 performs drying determination control on the drying procedure based on the temperature detected by the temperature sensor 105.

It should be noted that a mounting position of the temperature sensor 105 does not affect drying control performance of the laundry treatment apparatus. Therefore, the temperature sensor 105 may be mounted in the air duct 107 illustrated in FIGS. 1 and 2, mounted in the tub body 101 or the heating pipeline 108, or disposed on the heating device 103 or on the condenser device 102.

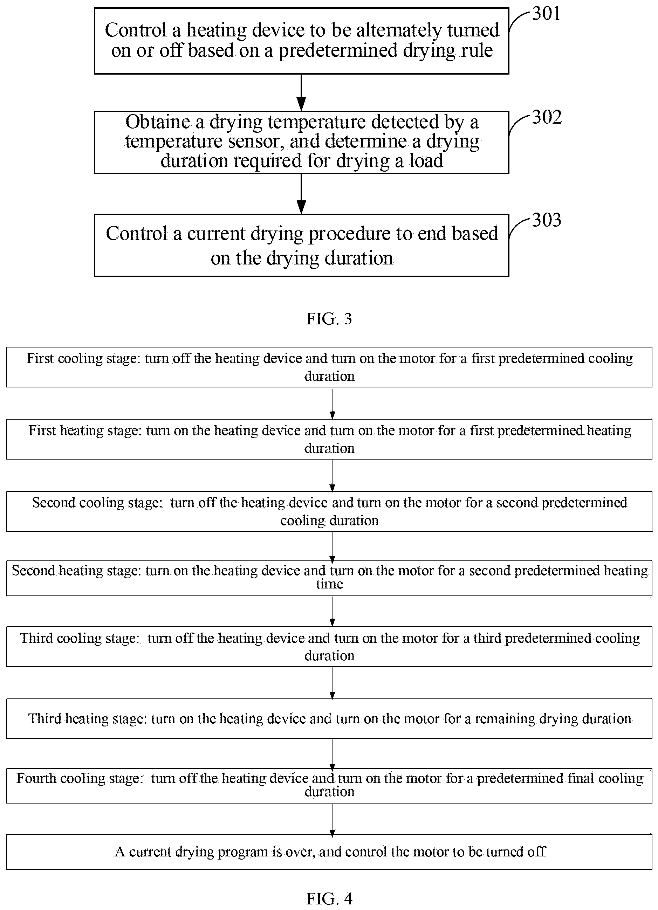

Based on the structure of the above laundry treatment apparatus, as illustrated in FIG. 3, the drying control method according to the embodiments of the present disclosure may specifically include the following steps 301 to 303.

At step 301, a heating device is controlled to be alternately turned on or off based on a predetermined drying rule.

When a user needs to use the laundry treatment apparatus to dry laundry, laundry needing to be dried is first placed into the tub body of the laundry treatment apparatus. The user puts in the load, and inputs a fabric type (like cotton, high-count fabric, synthetic fiber, or bulky articles) of the load and a drying degree required for drying to the laundry treatment apparatus through a knob and/or a button on a control panel of the laundry treatment apparatus, through a remote controller of the laundry treatment apparatus, or through a terminal such as a mobile phone or a computer communicating with the laundry treatment apparatus, and triggers the laundry treatment apparatus to start the drying procedure. The controller of the laundry treatment apparatus determines that the drying procedure starts, controls the motor to start, and controls the motor to drive the tub body to rotate based on a predetermined beat. The predetermined beat may be expressed as A1/B1. A1 is a duration of the motor being started within per unit time, B1 is a duration of the motor being turned off within per unit time, and the unit time may be half an hour, one hour, or the like. $A_1/(A_1+ B_1)*100\% >80\%$. For example, a value of $A_1/(A_1+ B_1)*100\%$ may be 90%, meaning that a duration of rotation of the motor during rotation of the tub body driven by controlling the motor accounts for 90% of a total time.

In the embodiments of the present disclosure, a predetermined duration corresponding to each control stage of the heating device is specified in the predetermined drying rule. A temperature in the tub body increases when the heating device is turned on and decreases when the heating device is turned off. Therefore, in the embodiments of the present disclosure, a control stage on which the heating device is turned on is referred to as a heating stage, and a control stage on which the heating device is turned off is referred to as a cooling stage.

When the drying procedure starts, the motor is controlled to be turned on to drive the tub body to rotate, and timing is started. When the timing time reaches a first predetermined cooling duration corresponding to a first cooling stage included in the predetermined drying rule, the heating device is controlled to be turned on for the first predetermined heating duration corresponding to the first heating stage included in the predetermined drying rule. A duration range of the first predetermined cooling duration may be 30s to 5min. For example, the first predetermined cooling duration may be 1min or 3min. The first heating stage is a pre-heating stage, and a duration range of the first predetermined heating duration may be 2min to 10min. For example, the first predetermined heating duration may be 5min or 8min.

In response to determining that the first predetermined heating duration is reached, the heating device is controlled to be turned off for a second predetermined cooling duration corresponding to a second cooling stage included in the predetermined drying rule. A duration range of the second predetermined cooling duration may be 30s to 5min. For example, the second predetermined cooling duration may be 1min or 3min. After the first heating stage is executed, the second cooling stage is executed immediately. Moreover, some heat exchange may be performed between the load in the tub body and air in the second cooling stage. In this way, a temperature at everywhere in the tub body is more uniform, and a temperature difference between the load and the air is reduced. Therefore, the drying temperature detected by the temperature sensor is closer to the actual temperature of the load, which enhances accuracy and reliability of the detected drying temperature.

In response to determining that the second predetermined cooling duration is reached, the heating device is controlled to be turned on again for a second predetermined heating duration corresponding to a second heating stage included in the predetermined drying rule. The second predetermined heating duration may be greater than or equal to 15min. For example, the second predetermined heating duration may be 15min or 30min. After the second cooling stage is completed, the second heating stage is executed. Moreover, the tub body is heated in the second heating stage. In this way, moisture evaporation in the load is accelerated.

In response to determining that the second predetermined heating duration is reached, the heating device is controlled to be turned off again for a third predetermined cooling duration corresponding to a third cooling stage included in the predetermined drying rule. A duration range of the third predetermined cooling duration may be 30s to 5min. For example, the third predetermined cooling duration may be 1min or 3min. After the second heating stage is executed, the third cooling stage is executed immediately. Similarly, some heat exchange may be performed between the load in the tub body and air in the third cooling stage. In this way, the temperature at each position in the tub body is more uniform, and the temperature difference between the load and the air is lowered. Therefore, the drying temperature detected by the temperature sensor is closer to the actual temperature of the load. Moreover, the accuracy and reliability of the detected drying temperature are improved.

In the embodiments of the present disclosure, during starting of the heating device, the controller controls the heating device for heating based on a predetermined power consumption ratio. The predetermined power consumption ratio may be that an average power of the heating device in the heating stage is greater than or equal to a 90% of maximum power in the entire drying procedure. For the heat pump dryer, a compressor is used to control turning on or turning off the heating device. Therefore, a controller in the heat pump dryer controls the heating device for heating based on a predetermined on-off ratio of the compressor. The predetermined on-off ratio may be that a duration of rotation of the compressor in the heating stage exceeding 90% of a duration in a specific stage.

When loads with different water contents are dried, the five stages including the first cooling stage, the first heating stage, the second cooling stage, the second heating stage, and the third cooling stage need to be executed. Except for the five stages, the loads with different water contents may be additionally alternately heated and cooled based on differences in water content. In some embodiments, the drying duration required for drying the load is determined by the operation of the following step 302, and the heating stage and the cooling stage that need to be executed subsequently are determined in accordance with the drying duration.

At step 302, a drying temperature detected by a temperature sensor is obtained, and a drying duration required for drying a load is determined.

In the embodiments of the present disclosure, an execution order of step 301 and an execution order of step 302 are not limited. Moreover, step 301 and step 302 may be performed synchronously. An operation of step 302 for determining the drying duration may be performed in each of the heating stage and the cooling stage at step 301, or performed only in the heating stage at step 301.

In each control stage of the heating device at step 301, a drying temperature in the tub body is detected in real time by the temperature sensor. Moreover, the drying duration is estimated based on the drying temperature. In the embodiments of the present disclosure, the drying duration may be estimated in any one of the following first through third manners.

In a first manner, the drying temperature detected by the temperature sensor is obtained during drying; an initial water content in the load is estimated based on the obtained drying temperature; and the drying duration required to dry the load is determined based on the initial water content and a heating power of the heating device.

In some embodiments, the initial water content may be calculated according to the following formula (1).

$$\text{M-water} = k1\ T1 + k2\ T2 + k3\ T3 + k4\ T4 + k5\ T5 + k6\ T6 + k7\ldots\ (1)$$

In formula (1), M-water is the initial water content in the load, k1 to k7 are known coefficients, and T1 to T6 are the drying temperatures detected by the temperature sensor. T1 to T6 may be the drying temperatures detected in the same control stage of the heating device or the drying temperatures detected in different control stages.

After the initial water content in the load is calculated by the formula (1), an amount of heat required for evaporating water at the initial water content may be determined based on the initial water content and a specific heat capacity of the water. The heating power of the heating device is obtained. Moreover, in accordance with law of conservation of energy, time required for providing the heat by the heating device is calculated based on the heat required for evaporating the water at the initial water content and the heating power of the heating device. The time is the drying duration required for drying the load.

In a second manner, a relationship function between the drying temperature and the drying duration is fitted through a large number of drying tests. In the embodiments of the present disclosure, the relationship function is referred to as a first time-temperature function, and the drying duration is calculated by means of the first time-temperature function. In some embodiments, the drying temperature detected by the temperature sensor is obtained during drying; and the drying duration required for drying the load is calculated by a predetermined first time-temperature function based on the obtained drying temperature.

Here, the first time-temperature function may be a function as illustrated in formula (2).

$$t_d = c1\ T1 + c2\ T2 + c3\ T3 + c4\ T4 + c5\ T5 + c6\ T6 + c7 \ldots (2)$$

In formula (2), $t_d$ is the drying duration, c1 to c7 are known coefficients, and T1 to T6 are the drying temperatures detected by the temperature sensor. T1 to T6 may be the drying temperatures detected in the same control stage of the heating device or the drying temperatures detected in different control stages.

In a third manner, considering a derivative in each stage or through use of dispersion of derivative, it may be realized that, two drying temperatures detected by the temperature sensor are obtained in each control stage of the heating device; and the drying duration required for drying the load is calculated by a predetermined second time-temperature function based on the two drying temperatures corresponding to each control stage.

The second time-temperature function may be a function as illustrated in formula (3).

$$t_d = c_0 + \sum_{i=1}^{6} a_i T_{a_i} + b_i T_{b_i} \ldots (3)$$

In formula (3), $t_d$ is the drying duration, $c_0$, $a_i$, and $b_i$ are all known coefficients, i is a serial number of the control stage of the heating device, and $T_{a_i}$ and $T_{b_i}$ are two drying temperatures detected by the temperature sensor in the $i_{th}$ control stage.

The drying duration is estimated by the any one of the first through third manners, which can reduce the influence of factors such as the weight of the load, the initial water content of the load, and the initial temperature in the tub body on the estimation precision of the drying duration. Therefore, the accuracy of determining the drying duration is increased.

After the drying duration is estimated in the any one of the above first to third manners, the heating stage and/or the cooling stage required to be executed after the third cooling duration at step 301 is determined on the basis of the drying duration, and the current drying procedure is further controlled to end at a suitable time.

At step 303, a current drying procedure is controlled to end based on the drying duration.

In some embodiments of the present disclosure, a remaining drying duration is determined based on the drying duration and the duration of each control stage in which the heating device is started and which has been executed. In some embodiments, the duration of each control stage that has been executed is subtracted from the estimated drying duration to obtain the remaining drying duration. During control of controlling the heating device to be alternately turned on or off at step 301, when it is determined that the third predetermined cooling duration at step 301 reaches, a third heating stage is executed, and the heating device is controlled to be turned on. Moreover, the heating device is kept heating for the remaining drying duration, and the moisture in the load is promoted to evaporate and separate from the load by heating. In response to determining that the remaining drying duration is reached, a fourth cooling stage is executed, the heating device is controlled to be turned off for a predetermined final cooling duration corresponding to the fourth cooling stage included in the predetermined drying rule; and in response to determining that the predetermined final cooling duration is reached, the current drying procedure is controlled to end, i.e., the motor is controlled to be turned off.

As illustrated in FIG. 4, the stages are executed in sequence. In the first cooling stage, the heating device is turned off and the motor is turned on for the first predetermined cooling duration; in the first heating stage, the heating device is turned on and the motor is turned on for the first predetermined heating duration; in the second cooling stage, the heating device is turned off and the motor is turned on for the second predetermined cooling duration; in the second heating stage, the heating device is turned on and the motor is turned on for the second predetermined heating duration; in the third cooling stage, the heating device is turned off and the motor is turned on for the third predetermined cooling duration; in the third heating stage, the heating device is turned on and the motor is turned on for the remaining drying duration; in the fourth cooling stage, the heating device is turned off and the motor is turned on for the predetermined final cooling duration; and the current drying procedure ends, the motor is controlled to be turned off.

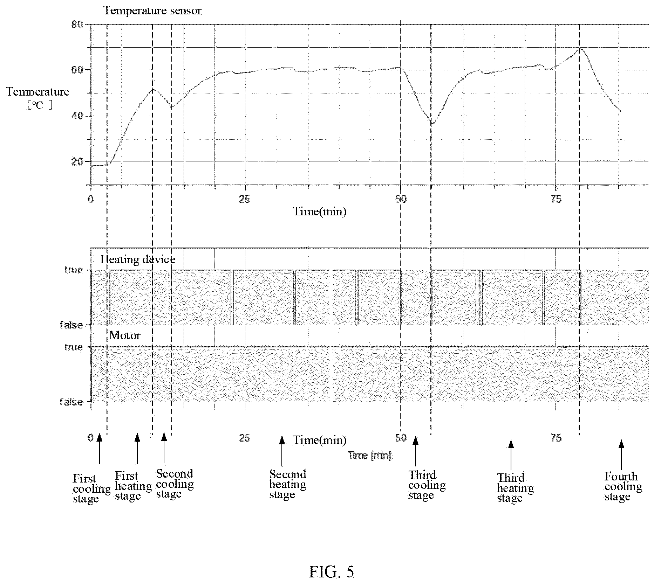

As illustrated in FIG. 5, in FIG. 5, true represents a turn-on state of the heating device, and false represents a turn-off state of the heating device. In the above-mentioned stages, the motor is maintained in the turn-on state all the time, and the heating device is turned on only in the heating stage and is turned off in the cooling stage. A change curve of the drying temperature detected by the temperature sensor over time in the whole drying process is illustrated in FIG. 5, in which the drying temperature rises in the heating stage and falls in the cooling stage.

In other embodiments of the present disclosure, considering that the water content of the load placed into the tub body by the user is indeterminate in an actual application scenario, a variety of possible situations from complete drying to a maximum water content containing saturation occurs. Based on the drying temperature detected by the temperature sensor in the current drying process, a minimum drying duration required for drying is estimated if the current load contains minimum moisture, as well as a maximum drying duration required for drying is estimated if the current load contains the maximum moisture. Then, the heating stage and/or the cooling stage required to be executed after the third cooling duration at step 301 is determined based on the minimum drying duration and the maximum drying duration.

In some embodiments, the drying temperature detected by the temperature sensor is obtained during drying; a maximum drying duration is calculated based on a predetermined maximum water content coefficient and the obtained drying temperature; and a minimum drying duration is calculated based on a predetermined minimum water content coefficient and the obtained drying temperature. The maximum drying duration and the minimum drying duration may be calculated by using the any one of the first to the third manners at step 302, and the known coefficients used in the formulas (1) to (3) by the maximum drying duration and the minimum drying duration are different. The known coefficient used for calculating the maximum drying duration is the predetermined maximum water content coefficient, and the known coefficient used for calculating the minimum drying duration is the predetermined minimum water content coefficient.

After the minimum drying duration and the maximum drying duration are calculated in the above manners, according to the minimum drying duration and the maximum drying duration, it is determined that whether the drying procedure needs to end in each heating stage. When the drying procedure needs to end in a heating stage, the final cooling stage is directly executed after the current heating stage is completed. When the drying procedure needs not to end in a heating stage, the heating stage and the cooling stage continue to be executed alternately. In some embodiments, it is determined that the current control stage of the heating device is the stage on which the heating device is controlled to be turned on, i.e., the current control stage is determined as the heating stage. Comparing the current elapsed drying duration with the minimum drying duration and the maximum drying duration, in response to determining that the elapsed drying duration is greater than the minimum drying duration and smaller than the maximum drying duration, it is indicated that the load is sufficient to be dried by the current heating stage. Therefore, the heating device is kept to be turned on until the elapsed drying duration is reached the drying duration required for drying the load that is calculated at step 302. Alternatively, in a process of the heating device being turned on for heating, it is determined that the elapsed drying duration is greater than or equal to the maximum drying duration, indicating that the load has been dried. Then, the heating device is controlled to be turned off for a predetermined final cooling duration included in the predetermined drying rule; and in response to determining that the predetermined final cooling duration is reached, the motor is controlled to be turned off, and the current drying procedure ends.

When the current heating stage ends, it is still determined that the elapsed drying duration is smaller than or equal to the minimum drying duration, indicating that the drying duration is too short. Therefore, the heating device continues to be controlled to be alternately turned on or off, and the operation of determining whether the elapsed drying duration is greater than the minimum drying duration and smaller than the maximum drying duration is executed in the stage on which the heating device is controlled to be turned on.

In other embodiments of the present disclosure, it may be determined that whether the drying process needs to be ended without using the minimum drying duration and the maximum drying duration. Instead, the drying temperature is used to directly determine whether the drying procedure needs to be ended. In some embodiments, in each heating stage, the drying temperature is monitored in real time through the temperature sensor, and it is determined that whether the drying temperature detected by the temperature sensor is greater than a predetermined temperature threshold. When the drying temperature detected by the temperature sensor is greater than the predetermined temperature threshold, it is indicated that the load has been dried, and the heating device is controlled to be turned off for the predetermined final cooling duration included in the predetermined drying rule; and in response to determining that the predetermined final cooling duration is reached, the motor is controlled to be turned off, and the current drying procedure ends. In response to determining that the drying temperature is smaller than or equal to the predetermined temperature threshold, it is indicated that the load has not been dried, the heating device continues to be controlled to be alternately turned on or off, and the current drying procedure is controlled to end until the drying temperature is greater than the predetermined temperature threshold.

In other embodiments of the present disclosure, it may also be determined that whether the drying procedure needs to be ended based on a derivative value of the drying temperature. In some embodiments, the drying temperature is monitored in real time by the temperature sensor in each heating stage. The derivative value of the drying temperature is calculated, and may reflect an instantaneous drying temperature. It is determined whether the derivative value is greater than a predetermined derivative threshold, and the predetermined derivative threshold may be a derivative of the predetermined temperature threshold. In response to determining that the derivative value of the drying temperature is greater than the predetermined derivative threshold, it is indicated that the load has been dried, and the heating device is controlled to be turned off for the predetermined final cooling duration included in the predetermined drying rule; and in response to determining that the predetermined final cooling duration is reached, the motor is controlled to be turned off, and the current drying procedure ends. In response to determining that the derivative value of the drying temperature is smaller than or equal to the predetermined derivative threshold, it is indicated that the load has not been dried, the heating device continues to be controlled to be alternately turned on or off, and the current drying procedure is controlled to end until the derivative value of the drying temperature is greater than the predetermined derivative threshold.

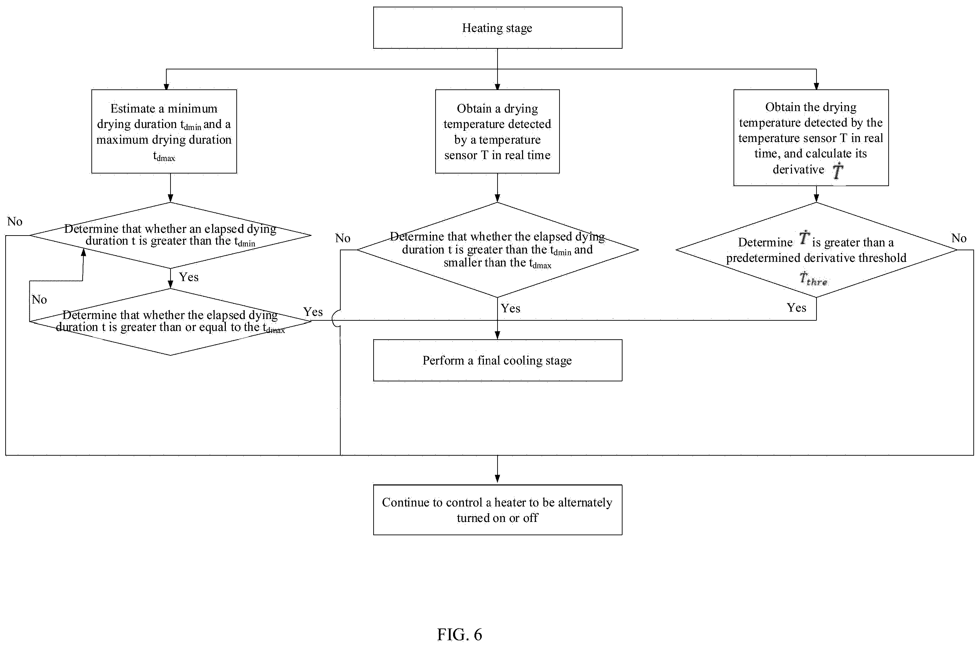

The above described three manners for determining whether to end the drying process according to the minimum drying duration and the maximum drying duration, and the drying temperature and the derivative value of the drying temperature are illustrated in FIG. 6. In the heating stage, the minimum drying duration $t_{dmin}$ and the maximum drying duration $t_{dmax}$ are estimated. Moreover, it is determined that whether the elapsed drying duration t is greater than $t_{dmin}$. When the elapsed drying duration t is smaller than or equal to $t_{dmin}$, the heating device continues to be controlled to be alternately turned on or off. When the elapsed drying duration t is greater than $t_{dmin}$, it is determined that whether the elapsed drying duration t is greater than or equal to $t_{dmax}$. When the elapsed drying duration t is smaller than $t_{dmax}$, returning to continue to determine whether the elapsed drying duration t is greater than $t_{dmin}$. When the elapsed drying duration t is greater than $t_{dmax}$, the final cooling stage is directly executed. Alternatively, in the heating stage, the drying temperature T detected by the temperature sensor is obtained in real time. Moreover, it is determined that whether T is greater than the predetermined temperature threshold $T_{thre}$. When T is greater than the predetermined temperature threshold $T_{thre}$, the final cooling stage is directly executed. When T is smaller than or equal to the predetermined temperature threshold $T_{thre}$, the heating device continues to be controlled to be alternately turned on or off. Alternatively, in the heating stage, the drying temperature T detected by the temperature sensor is obtained in real time, and the derivative of the drying temperature T is calculated as $\dot{T}$. Moreover, it is determined that whether the $\dot{T}$ is greater than the predetermined derivative threshold $\dot{T}_{thre}$. When the $\dot{T}$ is greater than the predetermined derivative threshold $\dot{T}_{thre}$, the final cooling stage is directly executed. When the $\dot{T}$ is smaller than or equal to the predetermined derivative threshold $\dot{T}_{thre}$, the heating device continues to be controlled to be alternately turned on or off.

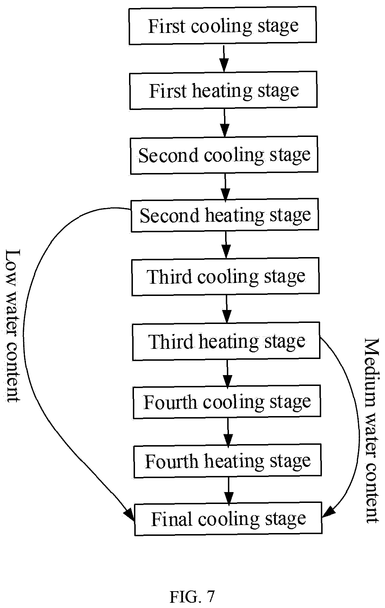

When a determination logic illustrated in FIG. 6 is introduced during an alternate drying process of the heating stage and the cooling stage illustrated in FIG. 4, the determination logic illustrated in FIG. 6 is executed in the first heating stage firstly. When a determination result is yes, the final cooling stage is directly executed. While in the actual application, the first heating stage is a preheating stage. Therefore, the determination logic illustrated in FIG. 6 is executed in this stage, and the determination result may be no. In this way, the drying procedure continues to be executed downwards based on an execution order illustrated in FIG. 4. Then, the determination logic is executed again in the second heating stage. When a determination result in the second heating stage is yes, it is indicated that the current load is a load with a low water content, and the final cooling stage is directly executed. When the determination result is no, the drying procedure continues to be executed downwards. Then, the determination logic will be executed again in the third heating stage. When a determination result in the third heating stage is yes, it is indicated that the current load is a load with a medium water content, and the final cooling stage is directly executed. When the determination result is no, the drying procedure continues to be executed downwards. After the fourth cooling stage illustrated in FIG. 4 continues to be executed downwards, an additional heating stage, called the fourth heating stage, will be executed. The determination logic is executed again in the fourth heating stage. When the determination result is yes, it is indicated that the current load is a load with a high water content. After the fourth heating stage is completed, the final cooling stage is executed, and the current drying procedure ends. After the determination logic is introduced, each of alternate execution processes of the heating stages and the cooling stages corresponding to the loads with different water contents is illustrated in FIG. 7.

In this way, the number of control stages of the heating device during drying is automatically adjusted based on an actual water content of the load in the above manners. The load with low water content is usually a small number of wet clothes or a large amount of nearly dried clothes. Therefore, the corresponding control stage of the heating device for the load with low water content may only include five control stages illustrated in FIG. 7, including the first cooling stage, the first heating stage, the second cooling stage, the second heating stage, and the final cooling stage. The corresponding control stage of the load with medium water content may include seven control stages illustrated in FIG. 7, including the first cooling stage, the first heating stage, the second cooling stage, the second heating stage, the third cooling stage, the third heating stage, and the final cooling stage. The load with high water content may include nine control stages illustrated in FIG. 7, including the first cooling stage, the first heating stage, the second cooling stage, the second heating stage, the third cooling stage, the third heating stage, the fourth cooling stage, the fourth heating stage, and the final cooling stage.

In order to further improve the accuracy of estimating the drying duration and reduce the cooling stage as much as possible on the basis of ensuring the estimation accuracy, for any heating stage or cooling stage during drying, a predicted duration corresponding to the current control stage may be calculated according to the drying temperature detected by the temperature sensor. In some embodiments, the drying temperature detected by the temperature sensor is obtained in a current control stage of the heating device; and a predicted duration corresponding to the current control stage is calculated based on the obtained drying temperature. The predicted duration of the control stage may be calculated according to the following formula (4).

$$t_{p_i} = r_0 + \sum_{s=1}^{i} r_{a_s} T_{a_s} + r_{b_s} T_{b_s} \ldots (4)$$

In formula (4), $t_{p_i}$ is the predicted duration of the current control stage, $r_0$, $r_{a_s}$, and $r_{b_s}$ are all known coefficients, and $T_{a_s}$ and $T_{b_s}$ are the drying temperatures detected by the temperature sensor in the current control stage.

For each control stage of the heating device during drying, after the predicted duration corresponding to the control stage is calculated by means of the above formula (4), the predetermined duration corresponding to the control stage in the predetermined drying rule may not be used, but the predicted duration is used as an actual duration of the control stage. In this way, the accuracy of determining the drying duration can be further improved, and a total duration of the drying procedure is effectively shortened.

In other embodiments of the present disclosure, a minimum duration from the predicted duration and a predetermined duration corresponding to the current control stage in the predetermined drying rule may also be determined, and is used as the actual duration of the current control stage. The heating device is controlled to work for the minimum duration in the current control stage.

In the embodiments of the present disclosure, by controlling the heating device to be alternately turned on or off, the load is alternately heated and cooled. Moreover, in the cooling stage, the temperature of the load is closer to the ambient temperature in the tub body. The drying temperature detected by the temperature sensor is equal to the ambient temperature in the tub body. In this situation, in a way of alternating heating and cooling enables the drying temperature detected by the temperature sensor to be closer to the actual temperature of the load through. Therefore, the drying duration for drying the load is estimated according to the drying temperature detected by the temperature sensor, and the accuracy of estimating the drying duration is very high. Moreover, in the embodiments of the present disclosure, the drying duration may be estimated by estimating the initial water content of the load, to solve a problem of low accuracy of determining the drying duration due to unknown initial water content. By properly controlling the heating device to be alternately turned on or off, it is achieved that only one temperature sensor is used to accurately estimate the drying duration. Moreover, in this solution, timing for controlling the end of the drying procedure is very reasonable. Therefore, not only is the product cost reduced, but also the drying effect is improved.

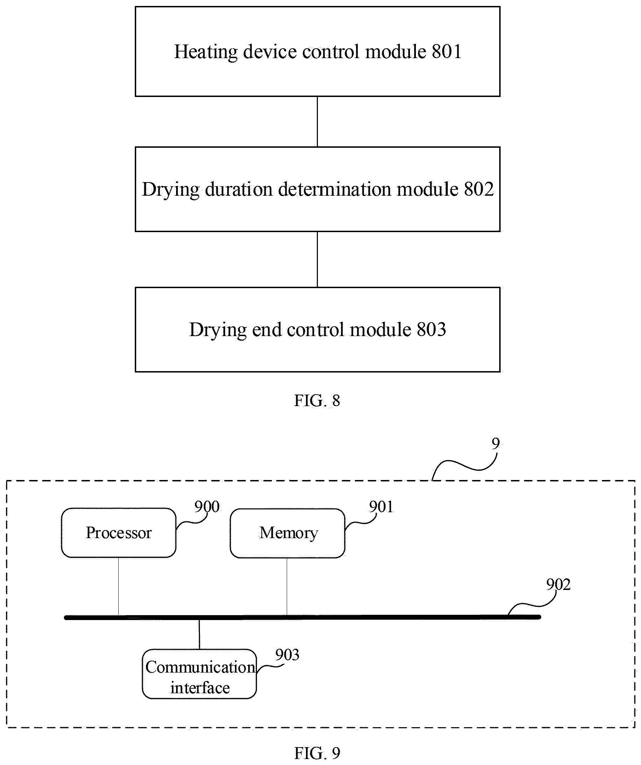

According to embodiments of the present disclosure, a drying control apparatus is provided and configured to implement the drying control method in any of the above embodiments. As illustrated in FIG. 8, the drying control apparatus includes a heating device control module 801, a drying duration determination module 802, and a drying end control module 803.

The heating device control module 801 is configured to control a heating device to be alternately turned on or off based on a predetermined drying rule.

The drying duration determination module 802 is configured to obtain a drying temperature detected by a temperature sensor, and determine a drying duration required for drying a load.

The drying end control module 803 is configured to control a current drying procedure to end based on the drying duration.

The predetermined drying rule includes a predetermined duration corresponding to each control stage of the heating device; and the heating device control module 801 is configured to: determine that the drying procedure is started, control a motor to drive a tub body to rotate, and in response to determining that a first predetermined cooling duration is reached, control the heating device to start for a first predetermined heating duration; in response to determining that the first predetermined heating duration is reached, control the heating device to be turned off for a second predetermined cooling duration; in response to determining that the second predetermined cooling duration is reached, control the heating device to start for a second predetermined heating duration; and in response to determining that the second predetermined heating duration is reached, control the heating device to be turned off for a third predetermined cooling duration.

The drying duration determination module 802 is configured to: obtain the drying temperature detected by the temperature sensor during drying; estimate an initial water content in the load based on the obtained drying temperature; and determine the drying duration required to dry the load based on the initial water content and a heating power of the heating device.

The drying duration determination module 802 is configured to: obtain the drying temperature detected by the temperature sensor during drying; and calculate the drying duration required for drying the load by a predetermined first time-temperature function based on the obtained drying temperature.

The drying duration determination module 802 is configured to: obtain two drying temperatures detected by the temperature sensor in each control stage of the heating device; and calculate the drying duration required for drying the load by a predetermined second time-temperature function based on the two drying temperatures corresponding to each control stage.

The drying end control module 803 is configured to: determine a remaining drying duration based on the drying duration and a predetermined duration of each control stage in which the heating device is started and which has been executed; in response to determining that the third predetermined cooling duration is reached, control the heating device to start for the remaining drying duration; in response to determining that the remaining drying duration is reached, control the heating device to be turned off for a predetermined final cooling duration included in the predetermined drying rule; and in response to determining that the predetermined final cooling duration is reached, control the motor to be turned off.

The drying duration determination module 802 is further configured to: obtain the drying temperature detected by the temperature sensor during drying; calculate a maximum drying duration based on a predetermined maximum water content coefficient and the obtained drying temperature; and calculate a minimum drying duration based on a predetermined minimum water content coefficient and the obtained drying temperature.

The drying end control module 803 is configured to: determine that a current control stage of the heating device is a stage in which the heating device is controlled to be turned on; in response to determining that an elapsed drying duration is greater than the minimum drying duration and smaller than the maximum drying duration, keep the heating device on until the elapsed drying duration is reached the drying duration required for drying the load; or in response to determining that the elapsed drying duration is greater than or equal to the maximum drying duration, control the heating device to be turned off for a predetermined final cooling duration included in the predetermined drying rule; in response to determining that the predetermined final cooling duration is reached, control the motor to be turned off; and in response to determining that the elapsed drying duration is smaller than or equal to the minimum drying duration, continue to control the heating device to be alternately turned on or off, and determine whether the elapsed drying duration is greater than the minimum drying duration and smaller than the maximum drying duration in a stage of controlling the heating device to be turned on.

The heating device control module 801 is further configured to: obtain the drying temperature detected by the temperature sensor in a current control stage of the heating device; calculate a predicted duration corresponding to the current control stage based on the obtained drying temperature; determine a minimum duration from the predicted duration and a predetermined duration corresponding to the current control stage in the predetermined drying rule; and control the heating device to work for the minimum duration in the current control stage.

The drying end control module 803 is further configured to: in response to determining that the drying temperature detected by the temperature sensor is greater than a predetermined temperature threshold, control the heating device to be turned off for a predetermined final cooling duration included in the predetermined drying rule; in response to determining that the predetermined final cooling duration is reached, control a motor to be turned off; or in response to determining that the drying temperature is smaller than or equal to the predetermined temperature threshold, continue to control the heating device to be alternately turned on or off until the drying temperature is greater than the predetermined temperature threshold.

The drying end control module 803 is further configured to: in response to determining that a derivative value of the drying temperature is greater than a predetermined derivative threshold, control the heating device to be turned off for a predetermined final cooling duration included in the predetermined drying rule; in response to determining that the predetermined final cooling duration is reached, control a motor to be turned off; or in response to determining that the derivative value of the drying temperature is smaller than or equal to the predetermined derivative threshold, continue to control the heating device to be alternately turned on or off until the derivative value of the drying temperature is greater than the predetermined derivative threshold.

The drying control apparatus according to the above embodiments of the present disclosure is based on the same inventive concept as the drying control method according to the embodiments of the present disclosure, and has the same beneficial effects as the method used, executed or implemented by application programs stored on the heating control apparatus.

According to embodiments of the present disclosure, a laundry treatment device is provided to implement the drying control method as described above. The laundry treatment device includes a temperature sensor disposed at any one of an air duct, a tub body, a heating pipeline, a heating device, and a condensing device of the laundry treatment device. FIG. 9 illustrates a schematic diagram of the laundry treatment device according to some implementations of the present disclosure. As illustrated in FIG. 9, the laundry treatment device 9 includes a processor 900, a memory 901, a bus 902, and a communication interface 903. The processor 900, the communication interface 903, and the memory 901 are connected to each other via the bus 902. A computer program executable on the processor 900 is stored in the memory 901. The processor 900, when executing the computer program, implements the drying control method according to any one of the above embodiments of the present disclosure.

The memory 901 may include a high-speed Random Access Memory (RAM), and may also include a non-volatile memory such as at least one disk memory. A communication connection between the system network element and at least one other network element is realized through at least one communication interface 903 in a wired or wireless manner, and Internet, a wide area network, a local network, a metropolitan area network, or the like may be used.

The bus 902 may be an ISA bus, a PCI bus, an EISA bus, or the like. The bus may be divided into an address bus, a data bus, a control bus, and the like. The memory 901 is configured to store a program thereon, and the processor 900 is configured to execute the program after receiving an execution instruction. The drying control method disclosed in any one of the above embodiments of the present disclosure can be applied to the processor 900, or implemented by the processor 900.

The processor 900 may be an integrated circuit chip with signal processing capability. During an implementation, each step of the above method may be implemented by an integrated logic circuit of hardware in the processor 900 or instructions in the form of software. The above processor 900 may be a general-purpose processor including a central processing unit (CPU), a network processor (NP), and the like, a digital signal processor (DSP), an application-specific integrated circuit (ASIC), a field programmable gate array (FPGA), or other programmable logic devices, discrete gate or transistor logic devices, discrete hardware components. Various methods, steps, and logic block diagrams disclosed in the embodiments of the present disclosure may be implemented or performed. The general-purpose processor may be a microprocessor or any conventional processor, etc. The steps of the method disclosed in connection with the embodiments of the present disclosure may be directly implemented by a hardware decoding processor, or implemented by a combination of hardware and software modules in the decoding processor. The software module may be located in well-known storage medium in the art such as a random access memory, a flash memory, a read-only memory, a programmable read-only memory, an electrically erasable programmable memory, or a register. The storage medium is located in the memory 901, and the processor 900 is configured to read information in the memory 901, and implement the steps of the above method in combination with its hardware.

The laundry treatment device according to the embodiments of the present disclosure is based on the same inventive concept as the drying control method according to the embodiments of the present disclosure, and has the same beneficial effects as the method used, executed or implemented by the laundry treatment device.

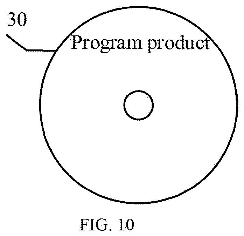

According to embodiments of the present disclosure, provided is a computer-readable storage medium corresponding to the drying control method according to the above embodiments. Referring to FIG. 10, the illustrated computer-readable storage medium is a compact disc 30 having a computer program, i.e., a program product, stored thereon. The computer program, when executed by a processor, implements the drying control method according to any one of the above embodiments.

It should be noted that examples of the computer-readable storage medium may also include, but are not limited to, a stage change memory (PRAM), a static random access memory (SRAM), a dynamic random access memory (DRAM), random Access memories (RAMs) of other types, a read only memory (ROM), an electrically erasable programmable read only memory (EEPROM), a flash memory, or other optical and magnetic storage media, which will not described in detail herein.

The computer-readable storage medium according to the above embodiments of the present disclosure is based on the same inventive concept as the drying control method according to the embodiments of the present disclosure, and has the same beneficial effects as the method used, executed, or implemented by the stored application program.

It should be noted that numerous specific details are set forth in the description herein. However, it should be understood that the embodiments of the present disclosure may be practiced without these specific details. In some examples, well-known structures and techniques are not illustrated in detail in order not to obscure the understanding of this description.

Similarly, it should be understood that in the above description of exemplary embodiments of the present disclosure, various features of the present disclosure are sometimes grouped in a single embodiment, accompanying drawing, or description thereof, in order to simplify the present disclosure and to facilitate understanding of one or more of the various inventive aspects. The method according to the present disclosure, however, is not to be interpreted as reflecting a schematic representation in which the claimed disclosure requires more features than those expressly recited in each claim. In some embodiments, as reflected by the appended claims, inventive aspects are intended for fewer features than all features of a single embodiment as described above. Thus, claims following the detailed description are hereby expressly incorporated into this detailed description, with each claim severing as a separate embodiment of the present disclosure

In addition, it will be appreciated by those skilled in the art that although some embodiments described herein include some features included in other embodiments rather than include other features, combinations of features from different embodiments are meant to be within the scope of the present disclosure and form different embodiments. For example, in the following claims, any of the claimed embodiments may be used in any combination.

The above is merely preferred embodiments of the present disclosure. However, the scope of the present disclosure is not limited thereto. Changes or substitutions readily conceived by those skilled in the art within the scope of the present disclosure shall fall within the scope of the present disclosure. Therefore, the scope of the present disclosure should be defined by the scope of the claims.

## Claims

1. A drying control method for a laundry treatment device, the method comprising:

controlling (301) a heating device to be alternately turned on or off based on a predetermined drying rule, the predetermined drying rule specifying first to third predetermined cooling durations and first and second predetermined heating durations, wherein controlling the heating device to be alternately turned on or off based on the predetermined drying rule comprises

determining that a drying procedure is started, controlling a motor to drive a tub body to rotate, and in response to determining that the first predetermined cooling duration is reached, controlling the heating device to start for the first predetermined heating duration,

in response to determining that the first predetermined heating duration is reached, controlling the heating device to be turned off for the second predetermined cooling duration,

in response to determining that the second predetermined cooling duration is reached, controlling the heating device to start for the second predetermined heating duration, and

in response to determining that the second predetermined heating duration is reached, controlling the heating device to be turned off for the third predetermined cooling duration;

obtaining (302) a plurality of drying temperatures, the drying temperatures comprising temperatures detected by a temperature sensor disposed at any one of an air duct, a tub body, a heating pipeline, a heating device, and a condensing device of the laundry treatment device;

determining (302), based on the drying temperatures and according to a relationship function fitted through a plurality of drying tests, a drying duration required for drying a load; and

controlling (303) the drying procedure to end based on the drying duration,

wherein said controlling (303) the drying procedure to end based on the drying duration comprises:

determining a remaining drying duration based on the drying duration and the first and second predetermined heating durations;

in response to determining that the third predetermined cooling duration is reached, controlling the heating device to start for the remaining drying duration;

in response to determining that the remaining drying duration is reached, controlling the heating device to be turned off for a predetermined final cooling duration comprised in the predetermined drying rule; and

in response to determining that the predetermined final cooling duration is reached, controlling the motor to be turned off.

2. The method according to claim 1, wherein said obtaining the plurality of drying temperatures comprises obtaining two temperatures detected by the temperature sensor during each of the first to third cooling durations and first and second predetermined heating durations.

3. A drying control apparatus configured to implement a drying control method for a laundry treatment device, the drying control apparatus comprising:

a heating device control module (801) configured to control a heating device to be alternately turned on or off based on a predetermined drying rule, the predetermined drying rule specifying first to third cooling durations and first and second predetermined heating durations, wherein controlling the heating device to be alternately turned on or off based on the predetermined drying rule comprises

determining that a drying procedure is started, controlling a motor to drive a tub body to rotate, and in response to determining that the first predetermined cooling duration is reached, controlling the heating device to start for the first predetermined heating duration,

in response to determining that the first predetermined heating duration is reached, controlling the heating device to be turned off for the second predetermined cooling duration,

in response to determining that the second predetermined cooling duration is reached, controlling the heating device to start for the second predetermined heating duration, and

in response to determining that the second predetermined heating duration is reached, controlling the heating device to be turned off for the third predetermined cooling duration;

a drying duration determination module (802) configured to obtain a plurality of drying temperatures, the drying temperatures comprising temperatures detected by a temperature sensor disposed at any one of an air duct, a tub body, a heating pipeline, a heating device, and a condensing device of the laundry treatment device, wherein the drying duration determination module is configured to determine, based on the drying temperatures and according to a relationship function fitted through a plurality of drying tests, a drying duration required for drying a load; and

a drying end control module (803) configured to control the drying procedure to end based on the drying duration by:

determining a remaining drying duration based on the drying duration and the first and second predetermined heating durations;

in response to determining that the third predetermined cooling duration is reached, controlling the heating device to start for the remaining drying duration;

in response to determining that the remaining drying duration is reached, controlling the heating device to be turned off for a predetermined final cooling duration comprised in the predetermined drying rule; and

in response to determining that the predetermined final cooling duration is reached, controlling the motor to be turned off.

4. A laundry treatment device (9), comprising a memory (901), a processor (900), and a computer program stored on the memory and executable on the processor, and further comprising a temperature sensor disposed at any one of an air duct, a tub body, a heating pipeline, a heating device, and a condensing device of the laundry treatment device, wherein the processor is configured to execute the computer program to implement the method according to claim 1 or claim 2.

5. A computer-readable storage medium, having a computer program stored thereon, wherein the computer program, when executed by a processor of the laundry treatment device as defined in claim 4, causes the processor to implement the method according to claim 1 or claim 2.

**Patentansprüche**

1. Trocknungssteuerungsverfahren für eine Wäschebehandlungseinrichtung, wobei das Verfahren Folgendes umfasst:

Steuern (301) einer Heizeinrichtung, sodass sie abwechselnd ein- und ausgeschaltet wird, auf der Basis einer vorbestimmten Trocknungsregel, wobei die vorbestimmte Trocknungsregel eine erste bis eine dritte vorbestimmte Kühldauer und eine erste und eine zweite vorbestimmte Heizdauer vorgibt, wobei das Steuern der Heizeinrichtung, sodass sie abwechselnd ein- und ausgeschaltet wird, auf der Basis der vorbestimmten Trocknungsregel Folgendes umfasst:

Bestimmen, dass eine Trocknungsprozedur gestartet wird, Steuern eines Motors, um einen Trommelkörper anzutreiben, sodass er sich dreht, und als Reaktion auf das Bestimmen, dass die erste vorbestimmte Kühldauer erreicht wird, Steuern der Heizeinrichtung, sodass sie für die erste vorbestimmte Heizdauer startet,

als Reaktion auf das Bestimmen, dass die erste vorbestimmte Heizdauer erreicht wird, Steuern der Heizeinrichtung, sodass sie für die zweite vorbestimmte Kühldauer ausgeschaltet wird,

als Reaktion auf das Bestimmen, dass die zweite vorbestimmte Kühldauer erreicht wird, Steuern der Heizeinrichtung, sodass sie für die zweite vorbestimmte Heizdauer startet, und

als Reaktion auf das Bestimmen, dass die zweite vorbestimmte Heizdauer erreicht wird, Steuern der Heizeinrichtung, sodass sie für die dritte vorbestimmte Kühldauer ausgeschaltet wird;

Erhalten (302) einer Vielzahl von Trocknungstemperaturen, wobei die Trocknungstemperaturen Temperaturen umfassen, die von einem an einem beliebigen von einem Luftkanal, einem Trommelkörper, einer Heizleitung, einer Heizeinrichtung und einer Verflüssigungseinrichtung der Wäschebehandlungseinrichtung angeordneten Temperatursensor detektiert werden;

Bestimmen (302), auf der Basis der Trocknungstemperaturen und in Abhängigkeit von einer durch eine Vielzahl von Trocknungstests angepassten Beziehungsfunktion, einer zum Trocknen einer Ladung erforderlichen Trocknungsdauer; und

Steuern (303) der Trocknungsprozedur, sodass sie endet, auf der Basis der Trocknungsdauer,

wobei das Steuern (303) der Trocknungsprozedur, sodass sie endet, auf der Basis der Trocknungsdauer Folgendes umfasst:

Bestimmen einer Resttrocknungsdauer auf der Basis der Trocknungsdauer und der ersten und der zweiten vorbestimmten Heizdauer;

als Reaktion auf das Bestimmen, dass die dritte vorbestimmte Kühldauer erreicht wird, Steuern der Heizeinrichtung, sodass sie für die Resttrocknungsdauer startet;

als Reaktion auf das Bestimmen, dass die Resttrocknungsdauer erreicht wird, Steuern der Heizeinrichtung, sodass sie für eine vorbestimmte abschließende Kühldauer, die in der vorbestimmten Trocknungsregel umfasst ist, ausgeschaltet wird; und

als Reaktion auf das Bestimmen, dass die vorbestimmte abschließende Kühldauer erreicht wird, Steuern des Motors, sodass er ausgeschaltet wird.

2. Verfahren nach Anspruch 1, wobei das Erhalten der Vielzahl von Trocknungstemperaturen das Erhalten von zwei Temperaturen umfasst, die von dem Temperatursensor während jeder von der ersten bis zu der dritten Kühldauer und der ersten und der zweiten vorbestimmten Heizdauer detektiert werden.

3. Trocknungssteuerungsvorrichtung, die dazu konfiguriert ist, ein Trocknungssteuerungsverfahren für eine Wäschebehandlungseinrichtung zu implementieren, wobei die Trocknungssteuerungsvorrichtung Folgendes umfasst:

ein Heizeinrichtungssteuerungsmodul (801), das dazu konfiguriert ist, eine Heizeinrichtung auf der Basis einer vorbestimmten Trocknungsregel zu steuern, sodass sie abwechselnd ein- und ausgeschaltet wird, wobei die vorbestimmte Trocknungsregel eine erste bis eine dritte Kühldauer und eine erste und eine zweite vorbestimmte Heizdauer vorgibt, wobei das Steuern der Heizeinrichtung, sodass sie abwechselnd ein- und ausgeschaltet wird, auf der Basis der vorbestimmten Trocknungsregel Folgendes umfasst:

Bestimmen, dass eine Trocknungsprozedur gestartet wird, Steuern eines Motors, um einen Trommelkörper anzutreiben, sodass er sich dreht, und als Reaktion auf das Bestimmen, dass die erste vorbestimmte Kühldauer erreicht wird, Steuern der Heizeinrichtung, sodass sie für die erste vorbestimmte Heizdauer startet,
als Reaktion auf das Bestimmen, dass die erste vorbestimmte Heizdauer erreicht wird, Steuern der Heizeinrichtung, sodass sie für die zweite vorbestimmte Kühldauer ausgeschaltet wird,
als Reaktion auf das Bestimmen, dass die zweite vorbestimmte Kühldauer erreicht wird, Steuern der Heizeinrichtung, sodass sie für die zweite vorbestimmte Heizdauer startet, und
als Reaktion auf das Bestimmen, dass die zweite vorbestimmte Heizdauer erreicht wird, Steuern der Heizeinrichtung, sodass sie für die dritte vorbestimmte Kühldauer ausgeschaltet wird,

ein Trocknungsdauerbestimmungsmodul (802), das dazu konfiguriert ist, eine Vielzahl von Trocknungstemperaturen zu erhalten, wobei die Trocknungstemperaturen Temperaturen umfassen, die von einem an einem beliebigen von einem Luftkanal, einem Trommelkörper, einer Heizleitung, einer Heizeinrichtung und einer Verflüssigungseinrichtung der Wäschebehandlungseinrichtung angeordneten Temperatursensor detektiert werden, wobei das Trocknungsdauerbestimmungsmodul dazu konfiguriert ist, auf der Basis der Trocknungstemperaturen und in Abhängigkeit von einer durch eine Vielzahl von Trocknungstests angepassten Beziehungsfunktion eine zum Trocknen einer Ladung erforderliche Trocknungsdauer zu bestimmen; und
ein Trocknungsendesteuerungsmodul (803), das dazu konfiguriert ist, die Trocknungsprozedur, sodass sie endet, auf der Basis der Trocknungsdauer durch Folgendes zu steuern:

Bestimmen einer Resttrocknungsdauer auf der Basis der Trocknungsdauer und der ersten und der zweiten vorbestimmten Heizdauer;
als Reaktion auf das Bestimmen, dass die dritte vorbestimmte Kühldauer erreicht wird, Steuern der Heizeinrichtung, sodass sie für die Resttrocknungsdauer startet;
als Reaktion auf das Bestimmen, dass die Resttrocknungsdauer erreicht wird, Steuern der Heizeinrichtung, sodass sie für eine vorbestimmte abschließende Kühldauer, die in der vorbestimmten Trocknungsregel umfasst ist, ausgeschaltet wird; und
als Reaktion auf das Bestimmen, dass die vorbestimmte abschließende Kühldauer erreicht wird, Steuern des Motors, sodass er ausgeschaltet wird.

4. Wäschebehandlungseinrichtung (9), die einen Speicher (901), einen Prozessor (900) und ein in dem Speicher gespeichertes und in dem Prozessor ausführbares Computerprogramm umfasst und ferner einen an einem beliebigen von einem Luftkanal, einem Trommelkörper, einer Heizleitung, einer Heizeinrichtung und einer Verflüssigungseinrichtung der Wäschebehandlungseinrichtung angeordneten Temperatursensor umfasst, wobei der Prozessor dazu konfiguriert ist, das Computerprogramm auszuführen, um das Verfahren nach Anspruch 1 oder Anspruch 2 zu implementieren.

5. Computerlesbares Speichermedium, das ein darin gespeichertes Computerprogramm aufweist, wobei das Computerprogramm, wenn es durch einen Prozessor der Wäschebehandlungseinrichtung nach Anspruch 4 ausgeführt wird, bewirkt, dass der Prozessor das Verfahren nach Anspruch 1 oder Anspruch 2 implementiert.

**Revendications**

1. Procédé de commande de séchage pour un dispositif de traitement de linge, le procédé comprenant les étapes consistant à :

   commander (301) un dispositif de chauffage pour qu'il s'allume ou s'éteigne alternativement sur la base d'une règle de séchage prédéterminée, la règle de séchage prédéterminée spécifiant des première à troisième durées de refroidissement prédéterminées et des première et seconde durées de chauffage prédéterminées, la commande du dispositif de chauffage pour qu'il s'allume ou s'éteigne alternativement sur la base de la règle de séchage prédéterminée comprenant les étapes consistant à :

   déterminer qu'une procédure de séchage est démarrée, commander un moteur pour qu'il entraîne un corps de cuve en rotation, et en réponse à la détermination du fait que la première durée de refroidissement prédéterminée est atteinte, commander le dispositif de chauffage pour qu'il démarre pendant la première durée de chauffage prédéterminée,
   en réponse à la détermination du fait que la première durée de chauffage prédéterminée est atteinte, commander le dispositif de chauffage pour qu'il s'éteigne pendant la deuxième durée de refroidissement prédéterminée,
   en réponse à la détermination du fait que la deuxième durée de refroidissement prédéterminée est atteinte, commander le dispositif de chauffage pour qu'il démarre pendant la seconde durée de chauffage prédéterminée, et
   en réponse à la détermination du fait que la seconde durée de chauffage prédéterminée est atteinte, commander le dispositif de chauffage pour qu'il s'éteigne pendant la troisième durée de refroidissement prédéterminée ;

   obtenir (302) une pluralité de températures de séchage, les températures de séchage comprenant des températures détectées par un capteur de température disposé au niveau d'un élément quelconque parmi un conduit d'air, un corps de cuve, une canalisation de chauffage, un dispositif de chauffage et un dispositif de condensation du dispositif de traitement de linge ;
   déterminer (302), sur la base des températures de séchage et selon une fonction de relation ajustée par le biais d'une pluralité de tests de séchage, une durée de séchage requise pour sécher une charge ; et
   commander (303) la procédure de séchage pour qu'elle se termine sur la base de la durée de séchage,
   ladite commande (303) de la procédure de séchage pour qu'elle se termine sur la base de la durée de séchage comprenant les étapes consistant à :

   déterminer une durée de séchage restante sur la base de la durée de séchage et des première et seconde durées de chauffage prédéterminées ;
   en réponse à la détermination du fait que la troisième durée de refroidissement prédéterminée est atteinte, commander le dispositif de chauffage pour qu'il démarre pendant la durée de séchage restante ;
   en réponse à la détermination du fait que la durée de séchage restante est atteinte, commander le dispositif de chauffage pour qu'il s'éteigne pendant une durée de refroidissement finale prédéterminée comprise dans la règle de séchage prédéterminée ; et
   en réponse à la détermination du fait que la durée de refroidissement finale prédéterminée est atteinte, commander le moteur pour qu'il s'éteigne.

2. Procédé selon la revendication 1, ladite obtention de la pluralité de températures de séchage comprenant l'étape consistant à obtenir deux températures détectées par le capteur de température pendant chacune des première à troisième durées de refroidissement et première et seconde durées de chauffage prédéterminées.

3. Appareil de commande de séchage configuré pour mettre en œuvre un procédé de commande de séchage pour un dispositif de traitement de linge, l'appareil de commande de séchage comprenant :

   un module de commande de dispositif de chauffage (801), configuré pour commander un dispositif de chauffage pour qu'il s'allume ou s'éteigne alternativement sur la base d'une règle de séchage prédéterminée, la règle de séchage prédéterminée spécifiant des première à troisième durées de refroidissement et des première et seconde durées de chauffage prédéterminées, la commande du dispositif de chauffage pour qu'il s'allume ou s'éteigne alternativement sur la base de la règle de séchage prédéterminée comprenant les opérations consistant à :

déterminer qu'une procédure de séchage est démarrée, commander un moteur pour qu'il entraîne un corps de cuve en rotation, et en réponse à la détermination du fait que la première durée de refroidissement prédéterminée est atteinte, commander le dispositif de chauffage pour qu'il démarre pendant la première durée de chauffage prédéterminée,

en réponse à la détermination du fait que la première durée de chauffage prédéterminée est atteinte, commander le dispositif de chauffage pour qu'il s'éteigne pendant la deuxième durée de refroidissement prédéterminée,

en réponse à la détermination du fait que la deuxième durée de refroidissement prédéterminée est atteinte, commander le dispositif de chauffage pour qu'il démarre pendant la seconde durée de chauffage prédéterminée, et

en réponse à la détermination du fait que la seconde durée de chauffage prédéterminée est atteinte, commander le dispositif de chauffage pour qu'il s'éteigne pendant la troisième durée de refroidissement prédéterminée ;

un module de détermination de durée de séchage (802), configuré pour obtenir une pluralité de températures de séchage, les températures de séchage comprenant des températures détectées par un capteur de température disposé au niveau d'un élément quelconque parmi un conduit d'air, un corps de cuve, une canalisation de chauffage, un dispositif de chauffage et un dispositif de condensation du dispositif de traitement de linge, le module de détermination de durée de séchage étant configuré pour déterminer, sur la base des températures de séchage et selon une fonction de relation ajustée par le biais d'une pluralité de tests de séchage, une durée de séchage requise pour sécher une charge ; et

un module de commande de fin de séchage (803), configuré pour commander la procédure de séchage pour qu'elle se termine sur la base de la durée de séchage en réalisant les opérations consistant à :

déterminer une durée de séchage restante sur la base de la durée de séchage et des première et seconde durées de chauffage prédéterminées ;

en réponse à la détermination du fait que la troisième durée de refroidissement prédéterminée est atteinte, commander le dispositif de chauffage pour qu'il démarre pendant la durée de séchage restante ;

en réponse à la détermination du fait que la durée de séchage restante est atteinte, commander le dispositif de chauffage pour qu'il s'éteigne pendant une durée de refroidissement finale prédéterminée comprise dans la règle de séchage prédéterminée ; et

en réponse à la détermination du fait que la durée de refroidissement finale prédéterminée est atteinte, commander le moteur pour qu'il s'éteigne.

4. Dispositif de traitement de linge (9), comprenant une mémoire (901), un processeur (900) et un programme informatique stocké sur la mémoire et exécutable sur le processeur, et comprenant en outre un capteur de température disposé au niveau d'un élément quelconque parmi un conduit d'air, un corps de cuve, une canalisation de chauffage, un dispositif de chauffage et un dispositif de condensation du dispositif de traitement de linge, le processeur étant configuré pour exécuter le programme informatique pour mettre en œuvre le procédé selon la revendication 1 ou la revendication 2.

5. Support de stockage lisible par ordinateur, sur lequel est stocké un programme informatique, le programme informatique, lorsqu'il est exécuté par un processeur du dispositif de traitement de linge selon la revendication 4, amenant le processeur à mettre en œuvre le procédé selon la revendication 1 ou la revendication 2.

FIG. 1

FIG. 2

Control a heating device to be alternately turned
on or off based on a predetermined drying rule  ⌐301

Obtaine a drying temperature detected by a
temperature sensor, and determine a drying
duration required for drying a load  ⌐302

Control a current drying procedure to end based
on the drying duration  ⌐303

FIG. 3

First cooling stage: turn off the heating device and turn on the motor for a first predetermined cooling
duration

First heating stage: turn on the heating device and turn on the motor for a first predetermined heating
duration

Second cooling stage: turn off the heating device and turn on the motor for a second predetermined
cooling duration

Second heating stage: turn on the heating device and turn on the motor for a second predetermined heating
time

Third cooling stage: turn off the heating device and turn on the motor for a third predetermined cooling
duration

Third heating stage: turn on the heating device and turn on the motor for a remaining drying duration

Fourth cooling stage: turn off the heating device and turn on the motor for a predetermined final cooling
duration

A current drying program is over, and control the motor to be turned off

FIG. 4

FIG. 5

Heating stage

Estimate a minimum drying duration $t_{dmin}$ and a maximum drying duration $t_{dmax}$

Obtain a drying temperature detected by a temperature sensor T in real time

Obtain the drying temperature detected by the temperature sensor T in real time, and calculate its derivative $\dot{T}$

No — Determine that whether an elapsed dying duration t is greater than the $t_{dmin}$

No — Determine that whether the elapsed dying duration t is greater than the $t_{dmin}$ and smaller than the $t_{dmax}$

Determine $\dot{T}$ is greater than a predetermined derivative threshold $\dot{T}_{thre}$ — No

Yes

No — Determine that whether the elapsed dying duration t is greater than or equal to the $t_{dmax}$ — Yes

Yes

Yes

Perform a final cooling stage

Continue to control a heater to be alternately turned on or off

FIG. 6

FIG. 7

Heating device control module 801

Drying duration determination module 802

Drying end control module 803

FIG. 8

9

Processor 900    Memory 901

902

Communication interface 903

FIG. 9

30

Program product

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012084997 A1
- US 2007220683 A1
- US 2011023321 A1
- JP H01135396 A
- US 5782012 A